Europäisches Patentamt

European Patent Office

Office européen des brevets

(19)

(11) Numéro de publication : **0 483 290 B1**

(12) **FASCICULE DE BREVET EUROPEEN**

(45) Date de publication du fascicule du brevet :
29.12.93 Bulletin 93/52

(51) Int. Cl.⁵ : **C02F 3/10**

(21) Numéro de dépôt : **90917929.3**

(22) Date de dépôt : **19.07.90**

(86) Numéro de dépôt international :
**PCT/BE90/00042**

(87) Numéro de publication internationale :
**WO 91/01279 07.02.91 Gazette 91/04**

(54) **FILTRE BIOLOGIQUE IMMERGEABLE POUR L'EPURATION DES EAUX USEES.**

(30) Priorité : **20.07.89 BE 8900789**

(43) Date de publication de la demande :
**06.05.92 Bulletin 92/19**

(45) Mention de la délivrance du brevet :
**29.12.93 Bulletin 93/52**

(84) Etats contractants désignés :
**AT BE CH DE DK ES FR GB IT LI LU NL SE**

(56) Documents cités :
**CH-A- 621 263**
**DE-A- 3 110 859**
**FR-A- 2 565 579**
**Patent Abstracts of Japan, vol. 12, no. 482**
**(C-533) (3329), 15 December 1988**

(73) Titulaire : **COFIDO Société Anonyme**
**rue Grétry 50/25**
**B-4020 Liège (BE)**

(72) Inventeur : **GILSON, Robert**
**Batti-Gérard 11**
**B-5201 Tihange (BE)**

(74) Mandataire : **Van Malderen, Michel**
**p.a. Office van Malderen 85/043 Boulevard de**
**la Sauvenière**
**B-4000 Liège (BE)**

## Description

### Objet de l'invention

L'invention concerne un "filtre biologique" dont l'enceinte peut être immergée par rapport au liquide à traiter.

Les filtres biologiques sont utilisés notamment pour le traitement des eaux usées. Il s'agit en fait de cuves ou réservoirs de traitement comportant des substrats ou supports pour des lits bactériens intervenant essentiellement dans la dégradation des matières organiques contenues dans les eaux usées.

### Arrière-plan technologique

En filtration biologique, il est connu d'utiliser différents systèmes fonctionnant en aérobiose ou en anaérobiose tels que les lits bactériens fluidisés ou fixes, les biodisques et les procédés à boues activées.

Dans le document FR-A-2 565 579, on a proposé une installation pour le traitement des eaux usées par des micro-organismes dans laquelle les micro-organismes du traitement sont absorbés sur des fibres de verre assemblées à la manière d'une brosse cylindrique; ils peuvent en être désorbés par action mécanique, ce qui régénère les organes de traitement.

L'utilisation de fibres de verre et leur assemblage en forme de brosse cylindrique rend ce type d'installation onéreux sans que soit garantie une accessibilité aisée au lit bactérien formé.

Dans le document DE-A-3 110 859, on décrit des dispositifs à usage multiple, notamment pour des échanges de matières comportant des plateaux spiralés.

Dans le document CH-A-621 263 on décrit un dispositif de traitement de liquides par des gaz, comportant un conduit contenant des copeaux de métal ou des matières plastiques.

Tous ces systèmes n'offrent que peu de surface de fixation pour le film bactérien par rapport au poids du support utilisé ou requièrent des infrastructures lourdes. Leur entretien en cas de colmatage est difficile vu leur grand volume ou leur non-accessibilité interne.

### Buts visés par l'invention

La présente invention a pour but d'améliorer la surface disponible pour la fixation bactérienne et de diminuer le coût des infrastructures périphériques au support bactérien tout en offrant une accessibilité aisée pour leur entretien.

### Eléments caractéristiques principaux de l'invention

Suivant la présente invention, le filtre biologique, immergeable pour l'épuration des eaux usées, est caractérisé en ce qu'il comprend comme support bactérien un ensemble d'écheveaux de rubans essentiellement continus en matière plastique en une disposition spiralée autour d' au moins deux organes de maintien.

L'ensemble des écheveaux de rubans est mis en oeuvre en le chargeant d'un lit bactérien selon des techniques classiques et en le disposant, grâce aux organes de maintien dans un réservoir de traitement des eaux usées, de préférence selon plusieurs plans verticaux successifs.

Avantageusement, les organes de maintien se présentent sous forme d'un cadre pouvant être extrait avec les écheveaux de rubans dont il est garni.

Dans un réservoir, il est possible de disposer selon des plans verticaux parallèles 3 à 10 cadres de ce type par mètre courant.

Les rubans formant les écheveaux sont essentiellement continus c'est-à-dire qu'ils présentent une grande longueur pour pouvoir être disposés facilement autour des organes de maintien en ne devant en principe maintenir les rubans qu'à leurs extrémités.

Bien entendu, il peut se produire qu'une discontinuité se présente par rupture ou lorsqu'on arrive à la fin d'une bobine et dans ce cas, une fixation intermédiaire sur l'organe de maintien peut être requise.

Selon un autre mode d'exécution, il est préférable d'assurer la fixation des rubans sur l'organe de maintien par clipsage d'un tube fendu longitudinalement d'un diamètre supérieur à l'organe de maintien.

Les rubans peuvent être obtenus à partir d'une barre de matière plastique transformée en rubans continus et spiralés par tournage.

Les barres de matière plastique utilisées sont d'une matière plastique quelconque susceptible de donner un ruban mince de préférence par tournage, au moyen d'un outil coupant. La largeur du ruban est en général de quelques dizaines de millimètres et son épaisseur est de préférence de quelques centièmes de millimètres. Toutes autres dimensions peuvent être choisies sans sortir du cadre de la présente invention.

Il a été constaté que la technique d'obtention des rubans par tournage d'une barre de matière plastique au moyen d'un outil tranchant donne un ruban non lisse qui convient particulièrement pour la réalisation du substrat recherché.

Le recours à d'autres techniques d'obtention de rubans, par exemple, par découpe au départ de films est envisageable.

Les rubans peuvent être fabriqués par extrusion de la matière plastique fondue. Eventuellement un traitement superficiel d'une ou des deux faces en vue d'une modification de l'état de surface du ruban, peut être prévu.

Les matières plastiques utilisées pour l'obtention des rubans sont choisies parmi les polyoléfines, les polyamides, les polyesters, l'ABS ou d'autres copolymères. Les matières plastiques utilisées sont rigides, semi-rigides ou souples.

De préférence on utilisera une matière plastique tel le polyéthylène ou le polypropylène qui donne des rubans semi-rigides convenant particulièrement bien pour l'obtention des écheveaux.

Les écheveaux de rubans peuvent être obtenus à partir d'une technique de fabrication quelconque.

Pour obtenir les écheveaux, on enroule régulièrement les rubans sur des organes de maintien, constitués, par exemple par des cadres tubulaires ou d'autres profilés, par rotation de ces rubans autour d'un axe de rotation situé de préférence à mi-distance entre les organes de maintien. Toutes autres techniques de bobinage peuvent être utilisées.

Selon une forme d'exécution particulièrement intéressante, il est possible simultanément à l'enroulement spiralé sur les organes de maintien de torsader le ruban sur lui-même.

Le garnissage des cadres peut comporter une série de passages successifs sur une même section du cadre. La fixation des rubans sur les longerons des cadres s'obtient par clipsage, soudage ou tout autre moyen de fixation. Les cadres sont fixés à l'enceinte de filtre de façon fixe ou amovible.

En principe, les rubans ont une largeur de 1 à 5 cm et sont torsadés à raison de 1,5 à 3,5 spires par mètre courant de ruban.

Il est apparu intéressant, selon une forme d'exécution avantageuse de l'invention de prévoir un montage de conduits amenant de l'air (ou un autre gaz) sous pression dans l'écheveau de ruban afin de nettoyer et de détasser les écheveaux de ruban.

D'autres détails d'exécution de l'invention apparaîtront à la description détaillée qui suit d'une forme d'exécution de l'invention donnée à titre d'illustration sans caractère limitatif.

## Brève description des dessins

Dans les figures annexées:
- la figure 1 représente une vue schématique du système d'enroulement des rubans sur les organes de maintien;
- la figure 2 représente une vue en coupe longitudinale et une vue en coupe transversale des organes de maintien;
- la figure 3 représente une vue en perspective et une vue en coupe frontale d'un écheveau de ruban prêt à être placé dans un module filtre biologique;
- la figure 4 représente une vue en coupe d'un module filtre biologique.

## Description d'un mode préféré de l'invention

Le rubans sont obtenus au départ d'un bobine de film polyéthylène de 0,03 mm d'épaisseur et d'environ 1000 mètres de longueur que l'on a découpé longitudinalement afin d'obtenir des rubans d'une largeur de 20 mm.

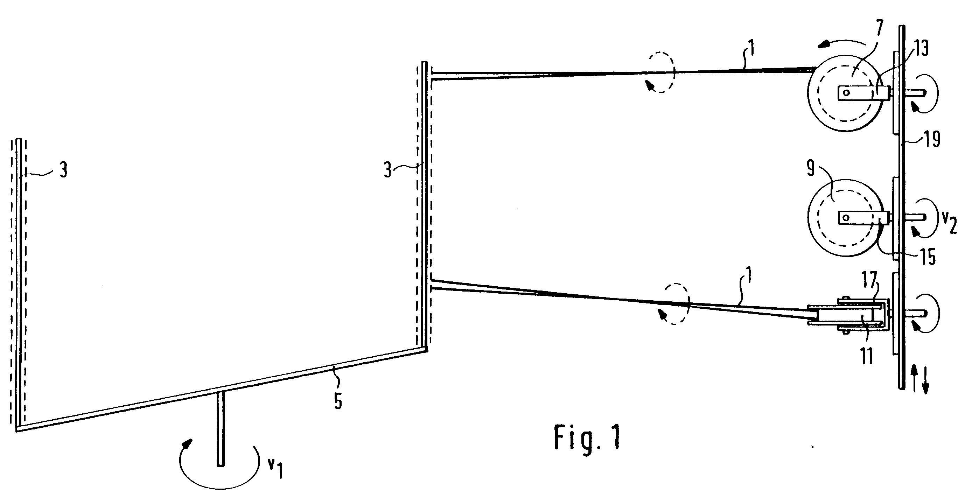

La figure 1 représente une vue schématique du système d'enroulement des rubans sur les organes de maintien.

Les rubans (1) sont enroulés sur deux organes de maintien (3) qui sont dans le présent cas des tuyaux en PVC d'une longueur de 1 mètre et d'un diamètre de 16 mm. Ces deux organes (3) sont placés sur les deux extrémités distantes de 1,1 m d'une fourche (5) rotative.

On peut enrouler simultanément plusieurs rubans provenant de différentes bobines (7, 9, 11) montées sur des supports (13, 15, 17) solidaires d'un dispositif (19) commun qui effectue un déplacement vertical afin d'enrouler les rubans en spirale autour des organes de maintien.

Les supports (13, 15, 17) des bobines sont, en outre, soumis à la rotation afin de torsader le ruban sur lui-même avant d'être enroulé autour des organes de maintien.

La vitesse de rotation v1 de la fourche (5) et la vitesse de rotation v2 des supports (13, 15, 17) des différentes bobines sont réglées de manière à obtenir 1,5 à 2,5 spires par mètre courant de ruban.

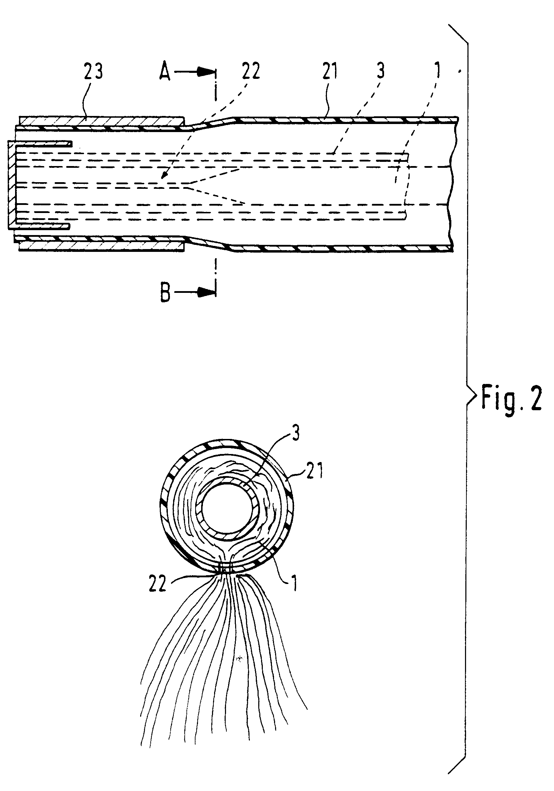

La figure 2 représente une vue en coupe longitudinale et une vue en coupe transversale des organes de maintien.

Après l'enroulage de la quantité de ruban désirée sur les organes de maintien, on assure la fixation du ruban (1) sur ces organes (3) par clipsage d'un tube (21) en PVC fendu (22) sur toute sa longueur et d'un diamètre supérieur à celui de l'organe de maintien (3). Le passage d'une bague (23) d'un diamètre inférieur à celui du tube (21) clipsé à chaque extrémité, solidarise définitivement les rubans en écheveaux manipulables.

Après avoir enroulé et fixé les rubans sur les deux organes de maintien (3) on désolidarise ces derniers de la fourche rotative (5)

Il faut tenir compte d'un retrait d'environ 10% des rubans lorsqu'on libère les écheveaux de la fourche d'enroulage. Ceci est dû à la mise sous traction des rubans lors du déroulage des bobines lorsqu'on travaille avec du polyéthylène.

Un second effet de la libération des fourches d'enroulage est de donner plus d'épaisseur aux écheveaux, les spires des rubans s'organisent pour former un "coussin".

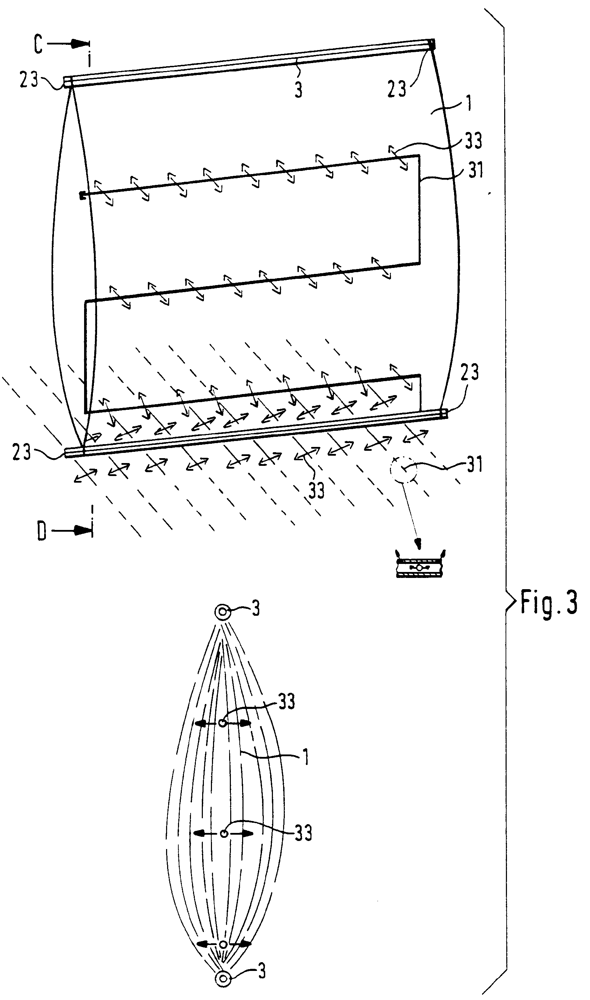

La figure 3 représente une vue en perspective et une coupe frontale d'un écheveau de ruban prêt à être placé dans un module filtre.

Les organes de liaison sont placés horizontalement dans le fond et au sommet du module de façon que les écheveaux soient placés de manière essentiellement verticale.

A titre d'illustration, voici un exemple de réalisation d'écheveaux.

Un écheveau de 1 m² peut être réalisé avec 5 bobines de ruban de 1.000 m de longueur, de 2 cm de large et de 0,03 mm d'épaisseur.

Cet écheveau est alors constitué pour chaque face, de 100 m² courant de support sur lequel peut s'accrocher la flore bactérienne, soit au total un écheveau fournit 200 m² de support.

Si l'on place 10 écheveaux tel que décrit précédemment dans un filtre de 1 m³ (caisson cubique de 1 m d'arête), le support bactérien (rubans):

- pèse 30 kg
- occupe 3% du volume
- offre ± 2.000 m² de surface d'accrochage à la flore bactérienne par m³ alors que les meilleurs résultats selon l'art antérieur ne permettent d'obtenir que 250 m² de support par m3.

Les écheveaux selon la présente invention permettent avantageusement d'obtenir une surface très importante de support pour la flore bactérienne tout en n'y occupant que peu de volume (3%).

La découpe des masses plastiques en rubans minces optimalise la surface offerte par unité de poids de matière mise en oeuvre par rapport aux autres systèmes connus.

Afin de faciliter le nettoyage et le détassage (mise en mouvement de la flore bactérienne excédentaire) dans le module filtre biologique, on a prévu un dispositif constitué de tuyaux (31) amenant de l'air pulsé au centre et/ou sous les écheveaux.

Des perforations latérales (33) sont prévues dans les tuyaux afin d'éjecter l'air pulsé dans les écheveaux.

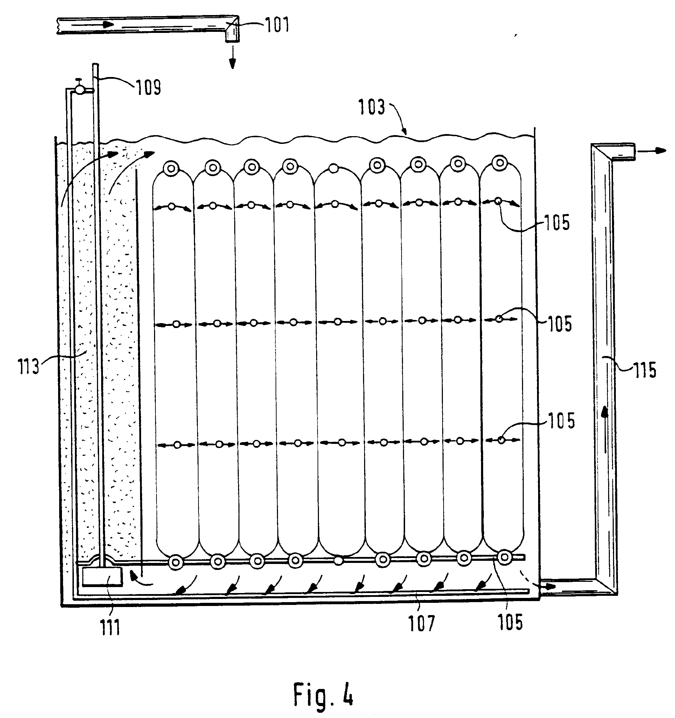

La figure 4 représente une vue en coupe d'un module filtre biologique constitué par un cube d'un mètre d'arête dans lequel sont disposés 9 écheveaux munis de 3 kg de rubans par écheveau.

Les eaux usées sont amenées (en 101) et déversées dans le bac constituant le filtre biologique. Les écheveaux (103) sont disposés verticalement.

Le nettoyage et le détassage des zones intérieures des écheveaux est assuré par une distribution d'air pulsé provenant de tuyaux perforés (105) situés à l'intérieur des écheveaux tandis que le nettoyage et le détassage des zones extérieures de ces écheveaux est réalisé à l'aide de l'air pulsé provenant de tuyaux (107) perforés placés en dessous desdits écheveaux.

Sur l'alimentation (109) en air pulsé est prévue une dérivation d'air pulsé destinée aux dispositifs de nettoyage.

L'oxygène nécessaire à la flore bactérienne provient également de l'alimentation en air pulsé et est amené vers un diffuseur (111), où cet oxygène diffuse vers une colonne d'oxygénation (113).

Les eaux épurées sont prélevées (en 115) et éventuellement un décanteur peut être prévu.

Les matières utilisées aussi bien pour la réalisation du support que de l'enceinte contenant ce dernier permettent de rendre l'ensemble immergeable et flottable vu leur poids spécifique proche de l'unité.

Les écheveaux peuvent également servir de garnissage dans les réservoirs de filtres biologiques classiques. La durée de vie est longue vu la non-biodégradabilité des matériaux choisis pour la mise en oeuvre.

L'orientation des rubans favorise l'élimination des particules de boues activées et rend la pénétration dans le garnissage, en cas de colmatage, aisé par des systèmes de nettoyage classique.

Ce système de filtre biologique peut être alimenté en air et en eau par tous procédés classiques et fonctionner en aérobiose ou en anaérobiose.

### Exemple numérique

Un module filtre biologique de 1 m³ constitué de 9 écheveaux de 200 m², soit 1800 m²/m³ de surface de support pour l'accrochage de la flore bactérienne nous donne les résultats suivants:

Le volume total du filtre varie avec le type d'oxygénation choisi, par exemple système à air pulsé, émulseur de surface, pompe à éjecteur (venturi), oxygène liquide,...

Dans cet exemple, nous avons utilisé la technique à air pulsé intégral (à la fois pour l'oxygénation, le recyclage et le détassage-nettoyage).

Le débit en eau brut est de 10 l/min ou de 14,4 m³/jour. Il convient de noter que 14,4 m³/jour correspondent à 80 ou 96 Equivalents habitants en volume selon la norme retenue 150 ou 180 l/jour Eq.h.

Le taux de $O_2$ sous les rubans est maintenu entre 1,5 et 3,2 ppm par la modulation du débit d'air.

La température varie entre 12 et 14°C.

Les résultats sont:

DCO moyenne à l'entrée: 482 mg d'$O_2$

DCO moyenne à la sortie: 68 mg $O_2$

Le rendement vaut $\dfrac{482 - 68}{482} = 85,9\%$

L'emploi successif de modules en série permet de réduire le DCO en-dessous des normes préconisées dans les réglementations du traitement des eaux usées.

### Revendications

1. Filtre biologique pour l'épuration des eaux usées caractérisé en ce qu'il comprend comme support bactérien un ensemble d'écheveaux de rubans (1) essentiellement continus en matière plastique en une disposition spiralée autour d'au moins deux organes de maintien (3).

2. Filtre biologique selon la revendication 1 caractérisé en ce que l'ensemble des écheveaux de rubans (1) est mis en oeuvre en le chargeant d'un lit bactérien selon des techniques classiques et en le disposant, grâce aux organes de maintien dans un réservoir de traitement des eaux usées, de préférence selon plusieurs plans verticaux successifs.

3. Filtre biologique selon l'une quelconque des revendications précédentes caractérisé en ce que les organes de maintien se présente sous forme d'un cadre pouvant être extrait avec les écheveaux de rubans dont il est garni.

4. Filtre biologique selon la revendication 3 caractérisé en ce que 3 à 10 cadres garnis d'écheveaux de rubans sont placés selon des plans verticaux parallèles par mètre courant.

5. Filtre biologique selon l'une quelconque des revendications précédentes caractérisé en ce que les rubans formant les écheveaux sont essentiellement continus c'est-à-dire qu'ils présentent une grande longueur pour pouvoir être disposés facilement autour des organes de maintien.

6. Filtre biologique selon l'une quelconque des revendications précédentes caractérisé en ce que la fixation des rubans sur l'organe de maintien est assurée par clipsage d'un tube (21) fendu longitudinalement d'un diamètre supérieur à l'organe de maintien (3).

7. Filtre biologique selon l'une quelconque des revendications précédentes caractérisé en ce que les rubans sont obtenus à partir d'une barre de matière plastique transformée en rubans continus par tournage.

8. Filtre biologique selon l'une quelconque des revendications précédentes caractérisé en ce que les rubans sont obtenus en découpant des films.

9. Filtre biologique selon l'une quelconque des revendications précédentes caractérisé en ce que les matières plastiques utilisées pour l'obtention des rubans sont choisies parmi les polyoléfines, les polyamides, les polyesters, l'ABS ou d'autres copolymères.

10. Filtre biologique selon l'une quelconque des revendications précédentes caractérisé en ce que la largeur du ruban est de l'ordre de quelques dizaines de millimètres et son épaisseur est de préférence de l'ordre de quelques centièmes de millimètres.

11. Filtre biologique selon l'une quelconque des revendications précédentes caractérisé en ce que les rubans ont une largueur de 1 à 5 cm et sont torsadés à raison de 1,5 à 3,5 spires par mètre courant de ruban.

12. Filtre biologique selon l'une quelconque des revendications précédentes caractérisé en ce que les écheveaux sont obtenus en enroulant régulièrement les rubans (1) sur des organes de maintien(3) par rotation de ces rubans autour d'un axe de rotation d'une fourche (5) situé de préférence à mi-distance entre les organes de maintien (3).

13. Filtre biologique selon l'une quelconque des revendications précédentes caractérisé en ce que le ruban est torsadé sur lui-même simultanément à l'enroulement spiralé sur les organes de maintien (3).

14. Filtre biologique selon l'une quelconque des revendications précédentes caractérisé en ce qu'il comporte un montage de conduits amenant de l'air ou un autre gaz sous pression dans l'écheveau de ruban afin de nettoyer et/ou de détasser des écheveaux de ruban.

**Claims**

1. Biological filter for the purification of waste water, characterised in that it comprises, as bacterial support, an assembly of skeins of essentially continuous bands (1) made of plastic material in a spiral arrangement around at least two holding members (3).

2. Biological filter according to Claim 1, characterised in that the assembly of the skeins of bands (1) is used by charging it with a bacteria bed according to conventional techniques and by arranging it, by virtue of the holding members, in a basin for waste water treatment, preferably in several successive vertical planes.

3. Biological filter according to any one of the preceding claims, characterised in that the holding members are in the form of a frame which can be extracted with the skeins of bands with which it is lined.

4. Biological filter according to Claim 3, characterised in that 3 to 10 frames lined with skeins of bands are positioned in parallel vertical planes per running metre.

5. Biological filter according to any one of the preceding claims, characterised in that the bands forming the skeins are essentially continuous, that is to say they have a large length so that they can be arranged easily around the holding members.

6. Biological filter according to any one of the preceding claims, characterised in that the fixation of the bands on the holding member is ensured by clipping on a longitudinally slotted tube (21) of a diameter greater than the holding member (3).

7. Biological filter according to any one of the preceding claims, characterised in that the bands are obtained from a bar of plastic material converted into continuous bands by turning.

8. Biological filter according to any one of the preceding claims, characterised in that the bands are obtained by cutting-out from films.

9. Biological filter according to any one of the preceding claims, characterised in that the plastic materials used for obtaining the bands are chosen from among polyolefins, polyamides, polyesters, ABS or other copolymers.

10. Biological filter according to any one of the preceding claims, characterised in that the width of the band is of the order of a few tens of millimetres and its thickness is preferably of the order of several hundredths of a millimetre.

11. Biological filter according to any one of the preceding claims, characterised in that the bands have a width of 1 to 5 cm and are twisted at a rate of 1.5 to 3.5 turns per running metre of holding member.

12. Biological filter according to any one of the preceding claims, characterised in that the skeins are obtained by winding the bands (1) regularly onto holding members (3) by rotating these bands about an axis of rotation of a fork (5) situated preferably halfway between the holding members (3).

13. Biological filter according to any one of the preceding claims, characterised in that the band is twisted about itself simultaneously to the spiralled winding onto the holding members (3).

14. Biolcgical filter according to any one of the preceding claims, characterised in that it comprises an assembly of conduits bringing air or another gas under pressure into the skein of band in order to clean and/or unbunch the skeins of band.

**Patentansprüche**

1. Biologischer Filter zum Reinigen von Abwasser, dadurch gekennzeichnet, daß er als Bakterienträger eine Gesamtheit von im wesentlichen kontinuierlichen Strängen aus Kunststoffbändern (1) in einer spiralförmigen Anordnung um mindestens zwei Halteorgane (3) herum aufweist.

2. Biologischer Filter gemäß Anspruch 1, dadurch gekennzeichnet, daß beim Einsatz die Gesamtheit der Stränge aus Bändern (1) nach herkömmlichen Verfahren mit einem Bakterienbett beladen wird, und mittels der Halteorgane vorzugsweise in mehreren, aufeinanderfolgenden vertikalen Ebenen in einem Abwasserbehandlungsbecken angeordnet wird.

3. Biologischer Filter gemäß irgendeinem der vorhergehenden Ansprüche, dadurch gekennzeichnet, daß die Halteorgane die Form eines Rahmens haben, der mit den Bandsträngen, die auf ihm angebracht sind, herausgenommen werden kann.

4. Biologischer Filter gemäß Anspruch 3, dadurch gekennzeichnet, daß 3 bis 10 mit Bandsträngen versehene Rahmen pro laufender Meter in parallelen vertikalen Ebenen angeordnet werden.

5. Biologischer Filter gemäß irgendeinem der vorhergehenden Ansprüche, dadurch gekennzeichnet, daß die Bänder, die die Stränge bilden, im wesentlichen kontinuierlich sind, das heißt, daß sie eine große Länge haben, damit sie um die Halteorgane herum leicht angeordnet werden können.

6. Biologischer Filter gemäß irgendeinem der vorhergehenden Ansprüche, dadurch gekennzeichnet, daß die Befestigung der Bänder auf dem Halteorgan durch Aufstecken eines in Längsrichtung gespaltenen Rohrs (21) erfolgt, das einen größeren Durchmesser als das Halteorgan (3) hat.

7. Biologischer Filter gemäß irgendeinem der vorhergehenden Ansprüche, dadurch gekennzeichnet, daß die Bänder aus einem Kunststoffstab hergestellt werden, der auf der Drehbank zu kontinuierlichen Bändern verarbeitet wird.

8. Biologischer Filter gemäß irgendeinem der vorhergehenden Ansprüche, dadurch gekennzeichnet, daß die Bänder durch Zerschneiden von Filmen hergestellt werden.

9. Biologischer Filter gemäß irgendeinem der vorhergehenden Ansprüche, dadurch gekennzeichnet, daß die zur Herstellung der Bänder verwendeten Kunststoffe unter den Polyolefinen, den Polyamiden, den Polyestern, ABS, oder anderen Copolymeren ausgewählt werden.

10. Biologischer Filter gemäß irgendeinem der vorhergehenden Ansprüche, dadurch gekennzeichnet, daß die Breite des Bandes einige zehn Millimeter beträgt, und seine Dicke vorzugsweise einige hundertstel Millimeter beträgt.

11. Biologischer Filter gemäß irgendeinem der vorhergehenden Ansprüche, dadurch gekennzeichnet, daß die Bänder eine Breite von 1 bis 5 cm haben, und auf den Halteorganen mit 1,5 bis 3,5 Windungen pro laufender Meter Halteorgan spiralförmig aufgewickelt sind.

12. Biologischer Filter gemäß irgendeinem der vorhergehenden Ansprüche, dadurch gekennzeichnet, daß zur Verwirklichung dieser Stränge die Bänder (1) auf Halteorgane (3) gleichmäßig aufgewickelt werden, wozu die Halteorgane (3) um eine vorzugsweise in der Mitte zwischen ihnen angeordnete Drehachse einer Gabel (5) gedreht werden.

13. Biologischer Filter gemäß irgendeinem der vorhergehenden Ansprüche, dadurch gekennzeichnet, daß das Band bei der spiralförmigen Aufwicklung auf den Halteorganen (3) gleichzeitig verdrillt wird.

14. Biologischer Filter gemäß irgendeinem der vorhergehenden Ansprüche, dadurch gekennzeichnet, daß er eine Anordnung von Rohrleitungen aufweist, über die Luft oder ein anderes Gas unter Druck in den Bandstrang eingeblasen wird, um Bandstränge zu reinigen und/oder aufzulockern.

Fig. 1

EP 0 483 290 B1

Fig. 2

C

23

3

23

1

33

31

23

31

23

33

D

Fig. 3

3

33

1

33

3

10

Fig. 4